# EUROPÄISCHE PATENTSCHRIFT

(11) **EP 2 516 817 B1**
(45) Veröffentlichungstag und Bekanntmachung des Hinweises auf die Patenterteilung: **17.05.2017**
(21) Anmeldenummer: 10787302.8
(22) Anmeldetag: 29.11.2010
(51) Int. Cl.: F01P 3/18, B60K 11/04, F02B 29/04

(54) **KÜHLEINRICHTUNG FÜR EINE BRENNKRAFTMASCHINE EINES KRAFTFAHRZEUGS**
COOLING DEVICE FOR AN INTERNAL COMBUSTION ENGINE OF A MOTOR VEHICLE
DISPOSITIF DE REFROIDISSEMENT POUR UN MOTEUR À COMBUSTION INTERNE D'UN VÉHICULE

(30) Priorität: 22.12.2009 DE 102009059930
(43) Veröffentlichungstag der Anmeldung: 31.10.2012
(73) Patentinhaber: Volkswagen Aktiengesellschaft, 38440 Wolfsburg (DE)
(72) Erfinder: OHLHOFF, Jörg, 38446 Wolfsburg (DE); SCHIEMANN, Bernd, 38159 Wierthe (DE); SCHMIDT, Marco, 38448 Wolfsburg (DE)
(86) Internationale Anmeldenummer: PCT/EP2010/007217
(87) Internationale Veröffentlichungsnummer: WO 2011/085750

(56) Entgegenhaltungen:
- WO-A1-97/42049
- DE-A1- 19 953 787
- FR-A1- 2 929 386
- US-A- 5 657 817

## Beschreibung

Die Erfindung betrifft eine Kühleinrichtung für einer Brennkraftmaschine eines Kraftfahrzeugs zuführbare Kühlmittel, wobei die Kühleinrichtung einen Wasserkühler und zumindest einen mittels Steckverbindungen mit diesem verbundenen weiteren Kühler aufweist.

Ein Wasserkühler dient bei modernen Verbrennungsmotoren zur Rückkühlung des zur Abkühlung des Motors verwendeten Wassers. Insbesondere ist die Kühlung der im Betrieb heißen Zylinder erforderlich, um eine Beschädigung der Kolben an der Zylinderwand zu verhindern und ein Verbrennen des Schmiermittels zu vermeiden.

Als Befestigungsmittel dienen am Kühlerblock ausgebildete Befestigungsflansche oder Befestigungsschienen, gegebenenfalls mit speziell ausgebildeten und in diese einsetzbaren Schraubenmuttern, an denen die Gehäuse mit gegebenenfalls ebenfalls besonders ausgebildeten Schrauben oder Bolzen befestigt sind.

Demgegenüber werden Ladeluftkühler als Zusatzaggregate in Verbrennungskraftmaschinen eingesetzt und dienen dem Abkühlen von in diese einzuspeisender, bereits vorverdichteter Luft zum Zwecke einer weiteren Verdichtung und damit einer Steigerung der Ausgangsleistung der Verbrennungskraftmaschinen. Dazu weist der einen Wärmetauscher darstellende Ladeluftkühler einen Kühlerblock mit einem Röhrensystem auf, das von einem Kühlmedium durchströmt wird. Zur Verbesserung des Wärmeaustauschs ist das Röhrensystem mit Rippen oder Lamellen versehen. Der Kühlerblock ist von einem gegenüber diesem abgedichteten Gehäuse für die Ladeluftdurchleitung umgeben, wie es beispielsweise aus der EP 0 036 756 B1 oder der EP 0 343 565 A2 bekannt ist.

Aus der DE 43 32 919 A1, die einen Wasserkühler mit einem daran befestigten Ladeluftkühler zum Gegenstand hat, ist eine Befestigungsanordnung mit Befestigungsmitteln bekannt, die jeweils aus einer selbstsichernden Schraube am Ladeluftkühler, die an diesem in einer Führung mit einer elastischen Auskleidung formschlüssig anliegt, und einer Öffnung für diese Schraube an der Schmalseite des Wasserkühlers gebildet ist, wobei der Rand der Öffnung von der Schraube hintergreifbar ist. Die Befestigung des Wasserkühlers erfolgt durch Einstecken desselben von oben in den Ladeluftkühler und Arretierung durch im unteren Bereich angeordnete Arretierungselemente und anschließendes Einschrauben der Schrauben in die Öffnungen.

Die Anordnung oder Ausbildung von Befestigungsmitteln am Kühlerblock für ein diesen umgebendes Kühlluftgehäuse oder eine Kühlluftzuführungshaube ist hinsichtlich des Erstellungsaufwands infolge von Metallbearbeitungsvorgängen, aber auch hinsichtlich der Montage und einer Demontage relativ aufwändig.

Weiterhin beschreibt die DE 196 45 507 A1 eine Befestigungsanordnung für eine Luftführungshaube an einem Ladeluftkühler, der zwei einander gegenüberliegend an einem quaderförmigen Kühlerblock angeordnete Luftleitkästen für den Ladelufteintritt und den Ladeluftaustritt aufweist. Die Luftführungshaube ist an der Kühllufteintrittsseite lösbar mit Befestigungselementen an den Luftleitkästen und zwischen diesen angeordnet. Hierzu dienen wenigstens eine Haltelasche aus Kunststoff mit wenigstens einer an dem einen Luftleitkasten angeordneten Zunge von im Wesentlichen rechteckigem Querschnitt und auf der der Haltelasche gegenüberliegenden Seite zwei Rastglieder aus Kunststoff für zwei im Abstand an dem anderen Luftleitkasten angeordnete Rastelemente.

Aus der DE 10 2006 037 761 A1 ist auch bereits eine Befestigungsanordnung für einen mit einem Wasserkühler verbundenen Ladeluftkühler bekannt, wobei der Wasserkühler wahlweise zusammen oder auch ohne den Ladeluftkühler an einer Haltestruktur im Frontend des Kraftfahrzeugs fixiert werden kann, um so einen modularen Aufbau zu schaffen. Die Fixiermittel des Wasserkühlers weisen einen nach unten vorspringenden Zapfen auf, der mit dem jeweiligen Zapfen des Ladeluftkühlers übereinstimmt, sodass der Wasserkühler auch ohne Zwischenschaltung des Ladeluftkühlers an der Haltestruktur fixiert werden kann.Eine Befestigungsanordnung für einen Ladeluftkühler an einem Wasserkühler wird auch im WO97/42049. Aufgabe der Erfindung ist es, eine Kühleinrichtung für eine Brennkraftmaschine eines Kraftfahrzeugs zu schaffen, die eine schnelle Montage und eine hohe Prozesssicherheit ermöglicht. Ferner sollen der Fertigungsaufwand und der erforderliche Bauraum reduziert werden.

Diese Aufgabe wird gelöst mit einer Befestigungsanordnung gemäß den Merkmalen des Patentanspruchs 1. Die Unteransprüche betreffen besonders zweckmäßige Weiterbildungen der Erfindung.

Erfindungsgemäß ist also eine Kühleinrichtung für eine Brennkraftmaschine vorgesehen, bei welcher der Wasserkühler und der Kühler in verschiedenen, insbesondere parallelen Ebenen nacheinander von der zugeführten Umgebungsluft durchströmbar angeordnet sind und bei der die Steckverbindungen in ihrer den Wasserkühler mit dem Kühler verbindenden Fixierposition jeweils in der Ebene parallel zu dem Kühler in zumindest eine Richtung eingeschränkt beweglich ausgeführt sind, wobei zumindest eine erste Steckverbindung in eine erste Richtung und zumindest eine zweite Steckverbindung in eine zweite Richtung quer zu der ersten Richtung beweglich ausgeführt ist. Hierdurch wird in überraschend einfacher Weise zugleich eine einfache, insbesondere sogar werkzeugslose Verbindung des Wasserkühlers mit dem Kühler einerseits sowie eine problemlose Montage der so geschaffenen Baueinheit an einer Tragstruktur im vorderen Bereich des Kraftfahrzeugs andererseits realisiert, die zugleich einen Ausgleich unterschiedlicher thermischer Dehnungen des Wasserkühlers und des Kühlers durch die eingeschränkte Beweglichkeit ermöglicht. Erfindungsgemäß wird so ein einfacher modularer Aufbau ermöglicht, welcher eine problemlose Kombination des Wasserkühlers und des Kühlers mit einer im Betrieb auftretenden großen Differenz der Arbeitstemperaturen und der damit verbunden unterschiedlichen thermischen Dehnung gestattet. Zudem dient diese Beweglichkeit zugleich dem Ausgleich von Fertigungstoleranzen, sodass die Montage vereinfacht wird. Dabei kann der Wasserkühler mit dem Kühler in einer Reihenschaltung oder Parallelschaltung des Kühlmittels nacheinander von dem Kühlmittel durchströmbar ausgeführt sein. Vorzugsweise sind diese jedoch voneinander unabhängig in unterschiedlichen Kühlmittelkreisläufen angeordnet.

Dabei wird ein weiter verbesserter Toleranzausgleich auch dadurch ermöglicht, dass die zweite Steckverbindung eine eingeschränkte Beweglichkeit in zwei zueinander orthogonalen Raumachsen aufweist. Auf diese Weise wird die problemlose thermische Dehnung in einer beliebigen Richtung in derselben Ebene ermöglicht, sodass der Wasserkühler und der Kühler ohne die Gefahr von im Betrieb auftretenden Spannungen miteinander verbunden werden können.

Dabei ist es auch besonders vorteilhaft, wenn die zweite Steckverbindung eine Montagerichtung in einer zu der Ebene des Kühlers im Wesentlichen parallelen Ebene aufweist. Hierdurch können der Wasserkühler und der Kühler mühelos gemeinsam in dem vorderen Bereich des Kraftfahrzeugs vor der Brennkraftmaschine von oben in die jeweilige seitliche Tragstruktur eingeschoben werden, wobei die zweite Steckverbindung die Endposition definiert.

Die vertikale Fixierung könnte allein durch die seitliche Tragstruktur erreicht werden. Besonders einfach ist hingegen eine Abwandlung der vorliegenden Erfindung, bei welcher eine erste Steckverbindung eine Montagerichtung im Wesentlichen orthogonal zu der Ebene des Kühlers aufweist. Hierdurch erfolgt also die Festlegung des Wasserkühlers und des Kühlers durch die erste Steckverbindung quer zu der jeweiligen Haupterstreckungsebene, sodass auf diese Weise eine schnelle und einfache Verbindung erreicht wird.

Eine weitere, besonders praxisgerechte Ausgestaltung der vorliegenden Erfindung wird auch dann erreicht, wenn der Wasserkühler mit dem Kühler mittels der Steckverbindung lösbar verbunden ist, sodass der Wasserkühler oder der Kühler im Service- oder Schadensfall separat voneinander entfernt oder ausgetauscht werden kann.

Dabei ist gemäß einer weiteren besonders empfehlenswerten Abwandlung zumindest eine Steckverbindung als eine Rastverbindung ausgeführt, sodass die Verbindung bei Erreichen der vorbestimmten Sollposition selbsttätig einrastet und die so eingestellte Position zuverlässig festlegt. Bei einer lösbaren Ausführung der Rastverbindung kann diese beispielsweise auch ausschließlich mittels eines entsprechenden Werkzeugs lösbar ausgeführt sein.

Weiterhin ist es besonders zweckmäßig, wenn in Bezug auf eine Einbauposition des Kraftfahrzeugs die erste Steckverbindung oberhalb der zweiten Steckverbindung angeordnet ist, sodass bei der Montage zunächst die zweite Steckverbindung in ihre vorbestimmte Position eingesetzt wird und dort gegebenenfalls verrastet, und anschließend die erste Steckverbindung durch eine Schwenkbewegung um die zweite Steckverbindung, die aufgrund ihrer eingeschränkten Beweglichkeit eine dementsprechend beschränkte Schwenkbewegung ermöglicht, in die Raststellung verlagert wird.

Der Kühler könnte eine für beliebige Anwendungszwecke bestimmte Bauform aufweisen. Besonders sinnvoll ist es hingegen, wenn der Kühler als ein Ladeluftkühler oder als ein Niedertemperaturkühler ausgeführt ist, der entsprechend der jeweiligen in dem Kraftfahrzeug zum Einsatz kommenden Brennkraftmaschine modular ergänzt werden kann. Selbstverständlich können zusätzlich zu dem Wasserkühler auch mehrere weitere Kühler eingesetzt werden, die jeweils hintereinander in verschiedenen oder auch nebeneinander in derselben Ebene angeordnet sein können.

Für den erfindungsgemäß realisierbaren Ausgleich unterschiedlicher thermischer Dehnungen eignet sich eine Weiterbildung der Erfindung, bei welcher der Kühler von einem gasförmigen Kühlmittel durchströmbar ist, bevorzugt für eine Kühlmitteltemperatur des Kühlers bis zu 100 °C oberhalb des flüssigen Kühlmittels des Wasserkühlers.

Besonders hilfreich ist es dabei in der Praxis auch, wenn der Wasserkühler mit dem Kühler mit vier paarweise baugleichen Steckverbindungen verbunden ist, sodass die modulare Erweiterbarkeit auch bei in bereits vorhandenen Kraftfahrzeugen eingesetzten Kühleinrichtungen problemlos möglich ist.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt jeweils in einer perspektivischen Darstellung
- Fig. 1: eine Kühleinrichtung während der Montage in einer Ansicht von links;
- Fig. 2: in einer vergrößerten Darstellung eine obere erste Steckverbindung der in Figur 1 gezeigten Kühleinrichtung;
- Fig. 3: in einer vergrößerten Darstellung eine untere zweite Steckverbindung der in Figur 1 gezeigten Kühleinrichtung;
- Fig. 4: die in Figur 1 gezeigte Kühleinrichtung in einer funktionsbereiten Einbauposition;
- Fig. 5: in einer vergrößerten Darstellung die Einbauposition der oberen ersten Steckverbindung der in Figur 4 gezeigten Kühleinrichtung;
- Fig. 6: in einer vergrößerten Darstellung die Einbauposition der unteren Steckverbindung der in Figur 4 gezeigten Kühleinrichtung.

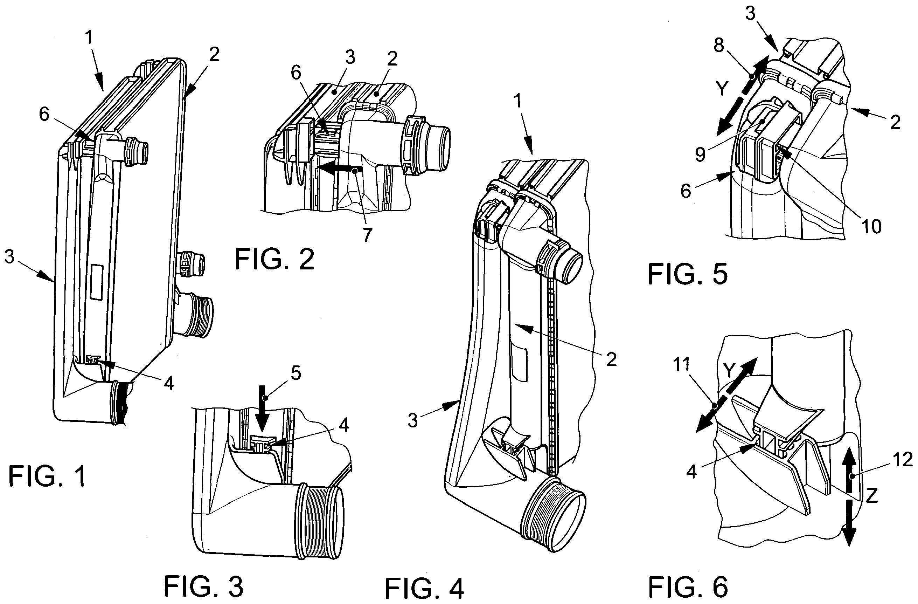

Die Figuren 1 bis 3 zeigen eine Kühleinrichtung 1 mit einem Wasserkühler 2 und mit einem als Ladeluftkühler ausgeführten weiteren Kühler 3 für eine nicht dargestellte Brennkraftmaschine eines Kraftfahrzeugs während des Montageprozesses. Dabei ist der Kühler 3 in Fahrtrichtung des Kraftfahrzeugs vor dem Wasserkühler 2 angeordnet und wird dementsprechend von der zuströmenden Umgebungsluft zuerst durchströmt. Bei der Montage werden der Wasserkühler 2 und der Kühler 3 zu einer Baueinheit verbunden, indem diese zunächst durch eine in Figur 3 näher dargestellte untere zweite Steckverbindung 4 durch eine vertikale Fügebewegung in Pfeilrichtung 5 verbunden und dann in eine geringfügig geneigte Position gebracht werden. Diese Position wird durch eine eingeschränkte Schwenkbeweglichkeit der unteren zweiten Steckverbindung 4 erreicht, wodurch der erforderliche Freiheitsgrad geschaffen wird, um so den erforderlichen Abstand des Wasserkühlers 2 und des Kühlers 3 zur Fixierung der oberen ersten Steckverbindung 6 einstellen zu können. Die Fixierung der oberen ersten Steckverbindung 6 erfolgt dann in einem abschließenden Montageschritt durch eine zu der Ebene des Kühlers 3 im Wesentlichen vertikale Fixierrichtung entsprechend dem in Figur 2 dargestellten Pfeil 7.

Die Figuren 4 bis 6 zeigen die in Figur 1 gezeigte Kühleinrichtung 1 in einer funktionsbereiten Einbauposition. Ausgehend von der zu einer Montageeinheit verbundenen und an einer nicht dargestellten Rahmenstruktur in dem Kraftfahrzeug fixierbaren, zu einer Baueinheit verbundenen Kühleinrichtung 1, bestehend aus dem Wasserkühler 2 und dem weiteren Kühler 3, gestattet die in Figur 5 dargestellte erste Steckverbindung 6 einen Ausgleich von Toleranzen oder unterschiedlichen thermischen Ausdehnungen aufgrund der unterschiedlichen Arbeitstemperaturen des Wasserkühlers 2 gegenüber dem weiteren Kühler 3 durch eine beschränkte Beweglichkeit in Y-Richtung des Doppelpfeils 8 in einer ersten Richtung parallel zu der Ebene des Wasserkühlers 2. Hierzu hat die Steckverbindung 6 eine mit dem Wasserkühler 2 verbundene Rastnase 9, die in einer schlitzförmigen Durchbrechung 10 des Kühlers 3 formschlüssig verrastet, wobei die Durchbrechung 10 entsprechend der gewünschten Beweglichkeit größer als die maximale Breite der Rastnase 9 bemessen ist. Demgegenüber weist die in Figur 6 dargestellte untere zweite Steckverbindung 4 zusätzlich zu der Beweglichkeit in der durch einen Doppelpfeil 11 gekennzeichneten Y-Richtung noch eine Beweglichkeit in der durch einen weiteren Doppelpfeil 12 gekennzeichneten Z-Richtung auf.

## Patentansprüche

1. Kühleinrichtung (1) für einer Brennkraftmaschine eines Kraftfahrzeugs zuführbare Kühlmittel, wobei die Kühleinrichtung (1) einen Wasserkühler (2) und zumindest einen mittels Steckverbindungen (4, 6) mit diesem verbundenen weiteren Kühler (3) aufweist, **dadurch gekennzeichnet, dass** der Wasserkühler (2) und der Kühler (3) in verschiedenen, insbesondere parallelen Ebenen nacheinander von der zugeführten Umgebungsluft durchströmbar angeordnet sind und dass die Steckverbindungen (4, 6) in ihrer den Wasserkühler (2) mit dem Kühler (3) verbindenden Fixierposition jeweils in der Ebene parallel zu dem Kühler (3) in zumindest eine Richtung eingeschränkt beweglich ausgeführt sind, wobei zumindest eine erste Steckverbindung (6) in eine erste Richtung (8) und zumindest eine zweite Steckverbindung (4) in eine zweite Richtung (12) quer zu der ersten Richtung (8) beweglich ausgeführt ist.

2. Kühleinrichtung (1) nach Anspruch 1, **dadurch gekennzeichnet, dass** die zweite Steckverbindung (4) eine eingeschränkte Beweglichkeit in Richtung von zwei zueinander orthogonalen Raumachsen (11, 12) aufweist.

3. Kühleinrichtung (1) nach den Ansprüchen 1 oder 2, **dadurch gekennzeichnet, dass** die zweite Steckverbindung (4) eine Montagerichtung (5) in einer zu der Ebene des Kühlers (3) im Wesentlichen parallelen Ebene aufweist.

4. Kühleinrichtung (1) nach zumindest einem der vorangehenden Ansprüche, **dadurch gekennzeichnet, dass** eine erste Steckverbindung (6) eine Montagerichtung (7) im Wesentlichen orthogonal zu der Ebene des Kühlers (3) aufweist.

5. Kühleinrichtung (1) nach zumindest einem der vorangehenden Ansprüche, **dadurch gekennzeichnet, dass** der Wasserkühler (2) mit dem Kühler (3) mittels der Steckverbindungen (4, 6) lösbar verbunden ist.

6. Kühleinrichtung (1) nach zumindest einem der vorangehenden Ansprüche, **dadurch gekennzeichnet, dass** zumindest eine Steckverbindung (4, 6) als eine Rastverbindung ausgeführt ist.

7. Kühleinrichtung (1) nach zumindest einem der vorangehenden Ansprüche, **dadurch gekennzeichnet, dass** in Bezug auf eine Einbauposition des Kraftfahrzeugs die erste Steckverbindung (6) oberhalb der zweiten Steckverbindung (4) angeordnet ist.

8. Kühleinrichtung (1) nach zumindest einem der vorangehenden Ansprüche, **dadurch gekennzeichnet, dass** der Kühler (3) als ein Ladeluftkühler oder ein Niedertemperaturkühler ausgeführt ist.

9. Kühleinrichtung (1) nach zumindest einem der vorangehenden Ansprüche, **dadurch gekennzeichnet, dass** der Kühler (3) von einem gasförmigen Kühlmittel durchströmbar ist.

10. Kühleinrichtung (1) nach zumindest einem der vorangehenden Ansprüche, **dadurch gekennzeichnet, dass** der Wasserkühler (2) mit dem Kühler (3) mit vier paarweise baugleichen Steckverbindungen (4, 6) verbunden ist.

## Claims

1. Cooling device (1) for coolant which can be fed to an internal combustion engine of a motor vehicle, the cooling device (1) having one water radiator (2) and at least one further radiator (3) which is connected to the said water radiator (2) by means of plug-in connections (4, 6), **characterized in that** the water radiator (2) and the radiator (3) are arranged such that they can be flowed through by the supplied ambient air one after another in different, in particular parallel planes, and **in that**, in their fixing position which connects the water radiator (2) to the radiator (3), the plug-in connections (4, 6) are configured such that they can be moved to a restricted extent in at least one direction in each case in the plane parallel to the radiator (3), at least one first plug-in connection (6) being configured such that it can be moved in a first direction (8) and at least one second plug-in connection (4) being configured such that it can be moved in a second direction (12) transversely with respect to the first direction (8).

2. Cooling device (1) according to Claim 1, **characterized in that** the second plug-in connection (4) has a restricted mobility in the direction of two spatial axes (11, 12) which are orthogonal with respect to one another.

3. Cooling device (1) according to Claim 1 or 2, **characterized in that** the second plug-in connection (4) has a mounting direction (5) in a plane which is substantially parallel to the plane of the radiator (3).

4. Cooling device (1) according to at least one of the preceding claims, **characterized in that** a first plug-in connection (6) has a mounting direction (7) substantially orthogonally with respect to the plane of the radiator (3).

5. Cooling device (1) according to at least one of the preceding claims, **characterized in that** the water radiator (2) is connected releasably to the radiator (3) by means of the plug-in connections (4, 6).

6. Cooling device (1) according to at least one of the preceding claims, **characterized in that** at least one plug-in connection (4, 6) is configured as a latching connection.

7. Cooling device (1) according to at least one of the preceding claims, **characterized in that** the first plug-in connection (6) is arranged above the second plug-in connection (4) in relation to an installation position of the motor vehicle.

8. Cooling device (1) according to at least one of the preceding claims, **characterized in that** the radiator (3) is configured as an intercooler or as a low-temperature radiator.

9. Cooling device (1) according to at least one of the preceding claims, **characterized in that** the radiator (3) can be flowed through by a gaseous coolant.

10. Cooling device (1) according to at least one of the preceding claims, **characterized in that** the water radiator (2) is connected to the radiator (3) by means of four structurally identical plug-in connections (4, 6) in pairs.

## Revendications

1. Dispositif de refroidissement (1) pour un réfrigérant pouvant être acheminé à un moteur à combustion interne d'un véhicule automobile, le dispositif de refroidissement (1) présentant un radiateur à eau (2) et au moins un radiateur supplémentaire (3) connecté à celui-ci au moyen de raccords enfichables (4, 6), **caractérisé en ce que** le radiateur à eau (2) et le radiateur (3) sont disposés l'un après l'autre dans différents plans, notamment parallèles, de manière à pouvoir être parcourus par l'air environnant, et **en ce que** les raccords enfichables (4, 6) sont réalisés de manière déplaçable dans une mesure limitée dans au moins une direction dans leur position fixée reliant le radiateur à eau (2) au radiateur (3), à chaque fois dans le plan parallèlement au radiateur (3), au moins un premier raccord enfichable (6) étant réalisé de manière déplaçable dans une première direction (8) et au moins un deuxième raccord enfichable (4) étant réalisé de manière déplaçable dans une deuxième direction (12) transversale à la première direction (8).

2. Dispositif de refroidissement (1) selon la revendication 1, **caractérisé en ce que** le deuxième raccord enfichable (4) présente une mobilité limitée dans la direction de deux axes spatiaux perpendiculaires l'un à l'autre (11, 12).

3. Dispositif de refroidissement (1) selon les revendications 1 ou 2, **caractérisé en ce que** le deuxième raccord enfichable (4) présente une direction de montage (5) dans un plan essentiellement parallèle au plan du radiateur (3).

4. Dispositif de refroidissement (1) selon au moins l'une quelconque des revendications précédentes, **caractérisé en ce qu'**un premier raccord enfichable (6) présente une direction de montage (7) essentiellement perpendiculaire au plan du radiateur (3).

5. Dispositif de refroidissement (1) selon au moins l'une quelconque des revendications précédentes, **caractérisé en ce que** le radiateur à eau (2) est connecté de manière amovible au radiateur (3) au moyen des raccords enfichables (4, 6).

6. Dispositif de refroidissement (1) selon au moins l'une quelconque des revendications précédentes, **caractérisé en ce qu'**au moins un raccord enfichable (4, 6) est réalisé sous forme de raccord par encliquetage.

7. Dispositif de refroidissement (1) selon au moins l'une quelconque des revendications précédentes, **caractérisé en ce que** le premier raccord enfichable (6) est disposé au-dessus du deuxième raccord enfichable (4) par rapport à une position d'installation du véhicule automobile.

8. Dispositif de refroidissement (1) selon au moins l'une quelconque des revendications précédentes, **caractérisé en ce que** le radiateur (3) est réalisé sous forme de refroidisseur d'air de suralimentation ou sous forme de refroidisseur basse température.

9. Dispositif de refroidissement (1) selon au moins l'une quelconque des revendications précédentes, **caractérisé en ce que** le radiateur (3) peut être parcouru par un réfrigérant gazeux.

10. Dispositif de refroidissement (1) selon au moins l'une quelconque des revendications précédentes, **caractérisé en ce que** le radiateur à eau (2) est connecté au radiateur (3) avec quatre raccords enfichables (4, 6) disposés par paires et de construction similaire.
